# EUROPEAN PATENT APPLICATION

(11) **EP 2 261 150 A2**
(43) Date of publication of application: **15.12.2010**
(21) Application number: 10165426.7
(22) Date of filing: 09.06.2010
(51) Int. Cl.: B65H 9/00, B65H 29/20, B65H 29/12, B65G 47/244

(54) **Posture converting device and corresponding paper-like material processing apparatus**

(30) Priority: 10.06.2009 JP 2009139593
(71) Applicant: Kabushiki Kaisha Toshiba, Minato-ku Tokyo 105-8001 (JP)
(72) Inventor: Asari, Yukio, Tokyo 105-8001 (JP); Todoriki, Toru, Tokyo 105-8001 (JP); Mitsuya, Yusuke, Tokyo 105-8001 (JP); Naruoka, Yoshihiko, Tokyo 105-8001 (JP)
(74) Representative: Patentship

(57) **Abstract**

According to one embodiment, a posture converting device (10,20) includes two upstream-side correction rollers (51R, 51L) spaced apart in a direction intersecting with a conveying direction of a paper-like material (P), two downstream-side correction rollers (52R, 52L) arranged at a position spaced apart from the upstream-side correction rollers (51R, 51L) toward a downstream side in the conveying direction, and a control unit (50) to independently control rotations of the four correction rollers (51R, 51L, 52R, 52L), wherein the control unit is adapted to rotate a conveyance posture of the paper-like material to some extent by causing a speed difference between the two upstream-side correction rollers (51R, 51L), and to rotate the paper-like material to a desired conveyance posture by causing a speed difference between the two downstream-side correction rollers (52R, 52L).

## Description

### TECHNICAL FIELD

Exemplary embodiments described herein relate to a paper-like material processing apparatus which picks up each of a plurality of paper-like materials one by one, reads information therefrom, sorts the material, and stacks the material, and also relate to a posture converting device incorporated into the paper-like material processing apparatus.

### BACKGROUND

In the past, an example of a known paper-like material processing apparatus includes a banknote processing machine which picks up a plurality of banknotes, reads the denomination bills, arranges the banknotes into an orientation, sorts the banknotes, and stacks the banknotes. Another example includes a mail processing machine which picks up a plurality of mails, reads destination addresses, sorts the mails, and stacks the mails.

For example, in a banknote processing machine, a banknote is preferably conveyed in the longer-side direction of the banknote and passed through a reading unit in that direction, so that the accuracy of reading operation is improved when the banknote processing machine reads the denomination bills. As a result, a longer portion of the banknote passes through the reading unit, and the banknote processing machine can obtain more information.

In contrast, it is preferable to convey the banknotes in the shorter-side direction, when each of banknotes given as a lump at a time is picked up one by one, or when already-inspected banknotes are sorted into denomination bills and stacked, for example. By conveying the banknotes in the shorter-side direction, the banknote processing machine can increase the pick-up speed of the banknotes or the conveyance speed of the banknotes to a stacker, and can decrease the possibility of jamming occurring during the conveyance operation, thus achieving highly reliable processing. In addition, this shorter-side direction conveyance of the banknotes is effective for reducing the size of the banknote processing machine.

This can also be said of the mail processing machine. That is, in the above-explained banknote processing machine and the mail processing machine, it is desired to develop a posture converting device capable of accurately converting, by 90 degrees, the conveyance posture of a banknote or a mail from lateral conveyance to longitudinal conveyance or from longitudinal conveyance to lateral conveyance during conveyance operation. In particular, a banknote processing machine for handling banknotes needs to convert the conveyance posture of a banknote with high accuracy in order to prevent false detection of the denomination bills and the genuineness.

An example of an apparatus converting the conveyance posture of a paper-like material by 90 degrees includes an apparatus using a cone roller disclosed in Japanese Patent Laid-Open No. 56-60671. The cone roller is a roller having a triangular or trapezoidal cross section taken along the central axis of the cone roller. The inclined peripheral surface thereof is brought in contact with a paper-like material being conveyed, so that the conveyance posture of the paper-like material is rotated to the smaller diameter side.

However, after the cone roller described above is used to change the posture of a paper-like material, the orientation and the conveyance position of the paper-like material may change according to the portion of the peripheral surface of the roller coming into contact with the paper-like material and according to the time (distance) for which the peripheral surface of the roller is in contact with the paper-like material. More specifically, when this cone roller is used, it is impossible to precisely rotate the conveyance posture of a paper-like material by a desired angle (for example, 90 degrees).

### BRIEF DESCRIPTION OF THE DRAWINGS

FIG. 1 is a schematic view illustrating a banknote processing machine according to an embodiment;

FIG. 2 is a schematic view illustrating a posture converting device incorporated into the banknote processing machine of FIG. 1;

FIG. 3 is a block diagram illustrating a control system of the posture converting device of FIG. 2;

FIG. 4 is a figure illustrating a banknote processed by the banknote processing machine of FIG. 1;

FIG. 5 is an explanatory diagram illustrating operation in which the posture converting device of FIG. 2 rotates a banknote in the clockwise direction (to right);

FIG. 6, as well as FIG. 5, is an explanatory diagram illustrating operation performed with a pair of correction rollers arranged the upstream side of the posture converting device of FIG. 2;

FIG. 7, as well as FIG. 5, is an explanatory diagram illustrating operation performed with a pair of correction rollers arranged on the downstream side of the posture converting device of FIG. 2;

FIG. 8 is an explanatory diagram illustrating operation in which the posture converting device of FIG. 2 rotates a banknote in the counterclockwise direction (to left);

FIG. 9, as well as FIG. 8, is an explanatory diagram illustrating operation performed with a pair of correction rollers arranged on the upstream side of the posture converting device of FIG. 2;

FIG. 10, as well as FIG. 8, is an explanatory diagram illustrating operation performed with a pair of correction rollers arranged on the downstream side of the posture converting device of FIG. 2;

FIG. 11 is an explanatory diagram illustrating behavior of a banknote when the posture of the banknote is rotated to right by the pair of correction rollers arranged on the upstream side of the posture converting device of FIG. 2;

FIG. 12 is a graph illustrating a speed pattern of the pair of correction rollers arranged on the upstream side when the conveyance posture of a banknote is changed as shown in FIG. 11;

FIG. 13 is an explanatory diagram subsequent to FIG. 11 illustrating behavior of a banknote when the posture of the banknote is rotated to right by a pair of correction rollers arranged on a downstream side;

FIG. 14 is a graph illustrating a speed pattern of the pair of correction rollers arranged on the downstream side when the conveyance posture of a banknote is changed as shown in FIG. 13;

FIG. 15 is an explanatory diagram illustrating behavior of a banknote when the posture of the banknote is rotated to left by the pair of correction rollers arranged on the upstream side of the posture converting device of FIG. 2;

FIG. 16 is a graph illustrating a speed pattern of the pair of correction rollers arranged on the upstream side when the conveyance posture of a banknote is changed as shown in FIG. 15;

FIG. 17 is an explanatory diagram subsequent to FIG. 15 illustrating behavior of a banknote when the posture of the banknote is rotated to left by a pair of correction rollers arranged on a downstream side;

FIG. 18 is a graph illustrating a speed pattern of the pair of correction rollers arranged on the downstream side when the conveyance posture of a banknote is changed as shown in FIG. 17;

FIG. 19 is a graph illustrating a speed pattern of the pair of correction rollers arranged on the upstream side when another posture converting device of FIG. 1 rotates to right a banknote conveyed by the lateral conveyance so as to convert lateral conveyance into longitudinal conveyance;

FIG. 20 is a graph illustrating a speed pattern of a pair of correction rollers arranged on a downstream side which further rotates the banknote to right after the pair of correction rollers arranged on an upstream side shown in FIG. 19 has rotated the banknote;

FIG. 21 is a graph illustrating a speed pattern of a pair of correction rollers arranged on an upstream side, in which, when another posture converting device of FIG. 1 rotates to left, a banknote conveyed by the lateral conveyance so as to convert lateral conveyance into longitudinal conveyance; and

FIG. 22 is a graph illustrating a speed pattern of a pair of correction rollers arranged on the downstream side which further rotates the banknote to left after the pair of correction rollers arranged on the upstream side shown in FIG. 21 has rotated the banknote.

### DETAILED DESCRIPTION

An aspect of the present disclosure relates to a posture converting device containing: two upstream-side correction rollers spaced apart in a direction intersecting with a conveying direction of a paper-like material; two downstream-side correction rollers arranged at a position spaced apart from the upstream-side correction rollers toward a downstream side in the conveying direction; and a control unit to independently control rotations of the four correction rollers, wherein the control unit is adapted to rotate a conveyance posture of the paper-like material to some extent by causing a speed difference between the two upstream-side correction rollers, and rotates the paper-like material to a desired (or predetermined) conveyance posture by causing a speed difference between the two downstream-side correction rollers. Here, "to rotate to some extent" can mean that the control unit lets the paper-like material rotate by a predetermined angle, in particular by an angle that is smaller than the angle corresponding to the desired (or predetermined) conveyance posture. Accordingly, the paper-like material may be rotated to an intermediate posture between the initial conveyance posture and the final (i.e. desired) conveyance posture.

Embodiments will be hereinafter described in detail with reference to the drawings.

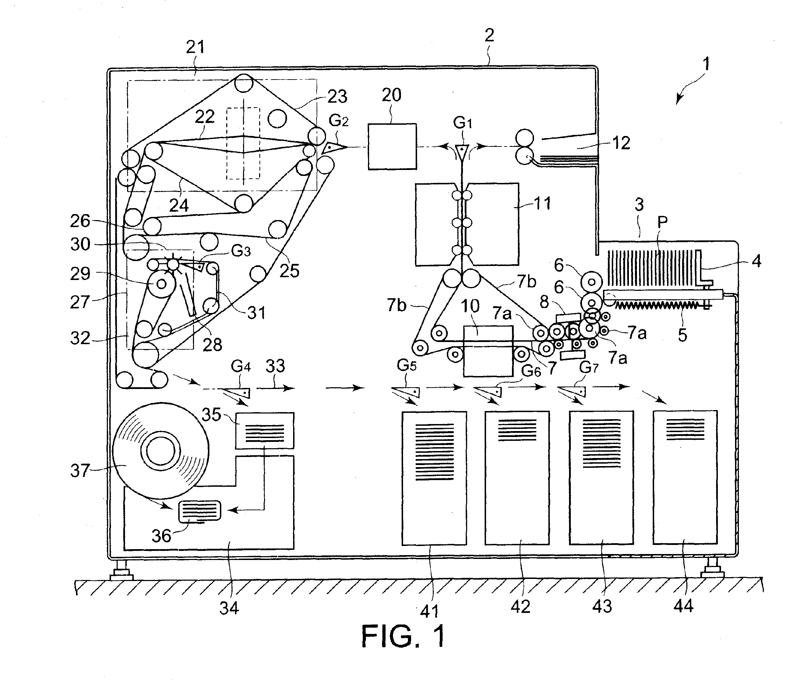

FIG. 1 schematically illustrates the internal structure of a banknote processing machine 1, i.e., an embodiment of a paper-like material processing apparatus. The user may place a plurality of banknotes P of different denomination bills and of different sizes into this banknote processing machine 1 in a mixed manner at a time, and the banknote processing machine 1 arranges all the banknotes P into the same orientation, sorts the banknotes P into groups according to denomination bills, and stacks the banknotes P.

The banknote processing machine 1 has a housing 2 serving as an outer shell of the banknote processing machine 1. An insert port 3 is arranged on a stage section of the housing 2 shown on the right side of FIG. 1. The user puts on this insert port 3 a lump of banknotes P in the upright position. In the present embodiment, the plurality of banknotes P in the upright position are inserted into the banknote processing machine 1 via the insert port 3 while the plurality of banknotes P are arranged such that the longer-side direction of the banknotes P is perpendicular to the plane of FIG. 1 (the longer-side direction of the banknotes P is substantially horizontal).

A backup plate 4 is arranged on the right side of the insert port 3 in FIG. 1, i.e., one end of the direction in which the plurality of inserted banknotes P are stacked. This backup plate 4 is urged by a spring 5 toward the left side of FIG. 1, namely, the backup plate 4 presses the plurality of placed banknotes P toward the left side of FIG. 1 in the direction in which the banknotes P are stacked.

Two pairs of take-out rollers 6 are arranged on the left side of the insert port 3 in FIG. 1, i.e., the other end of the direction in which the plurality of placed banknotes P are stacked. Namely, the take-out rollers 6 are arranged at such a position that the plurality of banknotes P are sandwiched by the take-out roller 6 and the backup plate 4. Each of the take-out rollers 6 rotates in the clockwise direction of FIG. 1, so as to fetch one of the plurality of banknotes P at the other end of the direction in which the banknotes P are stacked, and feed the fetched banknote P downward in FIG. 1 in the shorter-side direction of the banknote P.

In the present embodiment, the banknotes P inserted by way of the insert port 3 are fetched in the shorter-side direction of the banknotes P as described above. Accordingly, the number of banknotes P fetched per unit time can be increased. In addition, a certain gap can be formed between the banknotes P, and the fetching speed can be relatively slow. Therefore, the incidence of jamming during fetching operation can be kept to a low level.

The banknote P fetched from the insert port 3 is conveyed via a conveying route 7 defined by a plurality of conveyance rollers 7a and a conveyance belts 7b. At this occasion, the conveyance posture of the banknote P is a posture of lateral conveyance, in which the shorter-side direction of the banknote P is in the conveying direction.

On the way of the conveying route 7, an optical transmission sensor array 8 is arranged so as to detect the amount of skew of the banknote P (θ1, explained later). The optical sensor array 8 has a plurality of light emitting sections and light receiving sections arranged side by side in the direction intersecting with the conveying direction. The optical sensor array 8 is arranged in such a posture that a plurality of optical axes between the plurality of light emitting sections and light receiving sections are in the direction crossing the conveying direction.

In the present embodiment, the banknote P passing by the optical sensor array 8 is conveyed by the lateral conveyance. Accordingly, a region in which the banknote P intercepts the optical axes of the optical sensor array 8 becomes relatively long, which enhances the accuracy in detecting the amount of skew.

A posture converting device 10 (first posture converting device) for rotating the conveyance posture of the banknote P by 90 degrees is arranged further downstream of the optical sensor array 8 on the conveying route 7. This posture converting device 10 rotates, by 90 degrees, the banknote P conveyed laterally along the shorter-side direction, so as to convert the posture of the lateral conveyance into the posture of the longitudinal conveyance in which the longer-side direction of the banknote P conforms to the conveying direction.

If, at this occasion, the banknote P is conveyed out of the posture converting device 10 at the same conveyance speed as the conveyance speed of the above-described lateral conveyance, the gap between the banknotes P decreases since the length of the banknote P in the conveying direction is longer. As a result, there is a possibility that switching operation of a gate G1 on the downstream side (described later) fails to catch up with the conveyance speed. For this reason, when the posture converting device 10 rotates the posture of the banknote P by 90 degrees, the posture converting device 10 increases the conveyance speed to widen the gap between banknote P, thus maintaining about the same gap as the gap during the lateral conveyance.

The conveying route 7 passes through the posture converting device 10 and then bends upward in FIG. 1. A detection unit 11 is arranged above the bent section on the conveying route 7. The detection unit 11 detects the features of the banknote P such as the denomination bills, the orientation such as front-side/back-side and head/tail, and presence of dirt and damage. The detection unit 11 reads various kinds of information from both sides of the banknote P conveyed by the longitudinal conveyance on the conveying route 7, logically calculates the read information, and compares the calculated information with reference information, thus detecting the features of the banknote P as described above.

As described above, by the time when the banknote P passes through the detection unit 11, the conveyance posture of the banknote P has been switched to the longitudinal conveyance by the posture converting device 10. Accordingly, a longer region of the banknote P passes through the detection unit 11. As a result, the detection unit 11 can detect a larger amount of information from the banknote P, thus improving the accuracy in detecting the banknote P.

The conveying route 7 passes through the detection unit 11 and extends upward in FIG. 1. A gate G1 is arranged above the detection unit 11 on the conveying route 7. In addition, a plurality of gates G2 to G7 are arranged on the conveying route 7 extending in the banknote processing machine 1. These seven gates G1 to G7 switch the conveying direction of the banknote P based on the detection result of the detection unit 11.

The first gate on the conveying route 7, i.e., the gate G1, selectively switches the conveying direction of the banknote P between two directions. More specifically, in a case where the detection unit 11 detects a banknote which is determined not to be processed in processing at later stages, such as two banknotes fetched at a time, a banknote skewed to an extent larger than a certain level, or a damaged banknote or counterfeit banknote (including those other than a banknote) determined not to be a re-distributable authentic banknote, then such banknote is conveyed to the right side of FIG. 1 via the gate G1 and is discharged to a reject box 12. When the banknote P is conveyed into the reject box 12, the banknote P is conveyed by the longitudinal conveyance. It should be noted that the reject box 12 can be accessed from the outside of the housing 2.

On the other hand, in a case where the detection unit 11 determines that the banknote P can be normally processed in processing at later stages, the banknote P is conveyed via the gate G1 to the left side of FIG. 1 toward the second gate G2. At this occasion, the banknote P passes through a second posture converting device 20 arranged before the gate G2. The second posture converting device 20 rotates the bank note P by 90 degrees, so as to convert the conveyance posture of the banknote P from longitudinal conveyance to lateral conveyance. This posture converting device 20 has substantially the same structure as the above-described first posture converting device 10. When the banknote P passes through the posture converting device 20, the conveyance speed of the banknote P is returned back to a lower speed again.

As described above, the conveyance posture of the banknote P having passed through the detection unit 11 is converted from longitudinal conveyance to lateral conveyance. Accordingly, when the banknote P passes through processing units at later stages, the conveyance speed of the banknote P can be decreased, and conveyance jam can be reduced. Further, the banknote P is also conveyed by the lateral conveyance when the banknote P is stacked as described later. Therefore, the size of the space for accumulation can be reduced, and accordingly, the structure of the banknote processing machine 1 can be made smaller.

The banknotes P conveyed into the gate G2 are not consistent in the orientation in terms of front-side/back-side and head/tail as explained above. These banknotes P not consistent in the orientation in terms of front-side/back-side and head/tail are processed by each of the processing units arranged on a downstream of the gate G2, which will be described below. Thereby, the orientation in terms of front-side/back-side and head/tail are correctly arranged, and the banknotes P are sorted into denomination bills and stacked. That is, each of the gates G2 and G3 selectively switches the conveying direction of the banknote P between two directions.

On a conveying route branched at the downstream side of the gate G2, a front/back reversing mechanism 21 is arranged. The front/back reversing mechanism 21 reverses front/back of the banknote P. The conveying route passing through this front/back reversing mechanism 21 is formed into a twisted conveying route 22 turning 180 degrees about the central axis from the entrance to the exit. Two pairs of conveyer belts 23, 24 are arranged along the twisted conveying route 22 such that the conveyer belts 23, 24 are in surface contact with each other. The other conveying route branched at the downstream side of the gate G2 is a conveying path 25 which simply allows the banknote P to pass through.

The banknotes P reversed front/back in the front/back reversing mechanism 21 and the banknotes P having passed through the conveying path 25 are conveyed via a joining portion 26 into the gate G3. At this occasion, the length of the conveying path 25 is made such that a processing time of a banknote P passing through the gate G2, the front/back reversing mechanism 21, and arriving at the joining portion 26 is the same as a conveyance time of a banknote P passing through the conveying path 25 and arriving at the joining portion 26. Accordingly, a banknote P conveyed through the front/back reversing mechanism 21 and a banknote P passing through the conveying path 25 pass through the joining portion 26 at the same time. Therefore, regardless of the form of the processing, all of the banknotes P can be processed under the same condition.

On a conveying route branched at the downstream side of the gate G3, a head/tail reversing mechanism 27 is arranged. The head/tail reversing mechanism 27 reverses the orientation of the banknote P. The head/tail reversing mechanism 27 includes a switchback portion 28 temporarily storing banknotes P conveyed via the gate G3, a reversing roller 29 arranged adjacent to the switchback portion 28 so as to fetch, in the opposite direction, a tail side of a banknote P which has been conveyed into the switchback portion 28, and a tapping wheel 30 generating conveying force of a banknote P by pressing onto the reversing roller 29 the tail of the banknote P conveyed into the switch back portion 28.

A banknote P conveyed into the head/tail reversing mechanism 27 via the gate G3 is once held in the switchback portion 28 in such a manner that the head side of the banknote P along the conveying direction is located downward. Then, the tail side of the banknote P along the conveying direction is pushed against the reversing roller 29 by the rotation of the tapping wheel 30. With the rotation of the reversing roller 39, the banknote P held in the switchback portion 28 is fetched in the reverse direction with the tail side being in the front. As a result, the conveying direction of the banknote P is reversed and the head and tail are reversed.

The other conveying route branched at the downstream side of the gate G3 is a conveying path 35 which simply allows the banknote P to pass through. Both a banknote P having passed through the head/tail reversing mechanism 27 and a banknote P conveyed through the conveying path 31 are conveyed toward the gate G4 via the joining portion 32. The length of the conveying path 31 is made such that a processing time of a banknote P conveyed into the head/tail reversing mechanism 27 via the gate G3 is the same as a time of a banknote P passing through the conveying path 31.

The conveying path at the downstream side of the head/tail reversing mechanism 27 forms a horizontal conveying route 33 extending substantially in the horizontal direction above a plurality of stackers. Above this horizontal conveying route 33, the remaining four gates G4 to G7 are provided.

At the branching position of the gate G4 at the most upstream side, a banding device 34 is arranged. The banding device 34 forms a bundle of banknotes P by stacking, for example, 100 banknotes P and binding the banknotes P with a strip of paper. Banknotes P of the same denomination bills are conveyed into this banding device 34. The banding device 34 includes a stacker 35 for stacking banknotes P selectively conveyed via the gate G4, a banding portion 36 for banding 100 sheets of banknotes P stacked on the stacker 35 with a strip of paper, and a strip supply portion 37 for supplying a strip of paper which is used by the banding portion 36.

The banknotes P conveyed into the banding device 34 via the gate G4 are stacked on the stacker 35, and are thereafter conveyed into the banding portion 36. Then, the banknotes P are banded with a paper strip supplied from the strip supply portion 37. A bundle of a predetermined number of banded banknotes P is carried out of the machine by a conveyor, which is not shown in the drawings.

At the branching positions of the three gates G5, G6 and G7 at the downstream side of the gate G4 along the horizontal conveying route 33, there are provided four stackers 41, 42, 43 and 44, which are more than the number of gates by one. Banknotes P selectively distributed by the gate G5 are stacked in the stacker 41. Banknotes P selectively distributed by the gate G6 are stacked in the stacker 42. Banknotes P selectively distributed by the gate G7 are stacked in the stacker 43 or 44.

The banknotes P stacked in the stacker 35 of the banding device 34 and the four stackers 41 to 44 are passed selectively through the front/back reversing mechanism 21 and/or the head/tail reversing mechanism 27 and are stacked in the predetermined stackers with the same orientation in terms of front-side/back-side and head/tail. In this example, the orientation of the banknotes P respectively stacked in the stackers 35 and 41 to 44 is such that the longer-side direction of the banknotes P is substantially perpendicular to the plane of FIG. 1.

As described above, with the banknote processing machine 1 according to the present embodiment, the banknotes P inserted into the banknote processing machine 1 via the insert port 3 with inconsistent orientation in terms of front-side/back-side and head/tail can be automatically arranged in the same orientation. Accordingly, all the banknotes P can be automatically arranged in the same orientation, and can be sorted and stacked on the desired stackers.

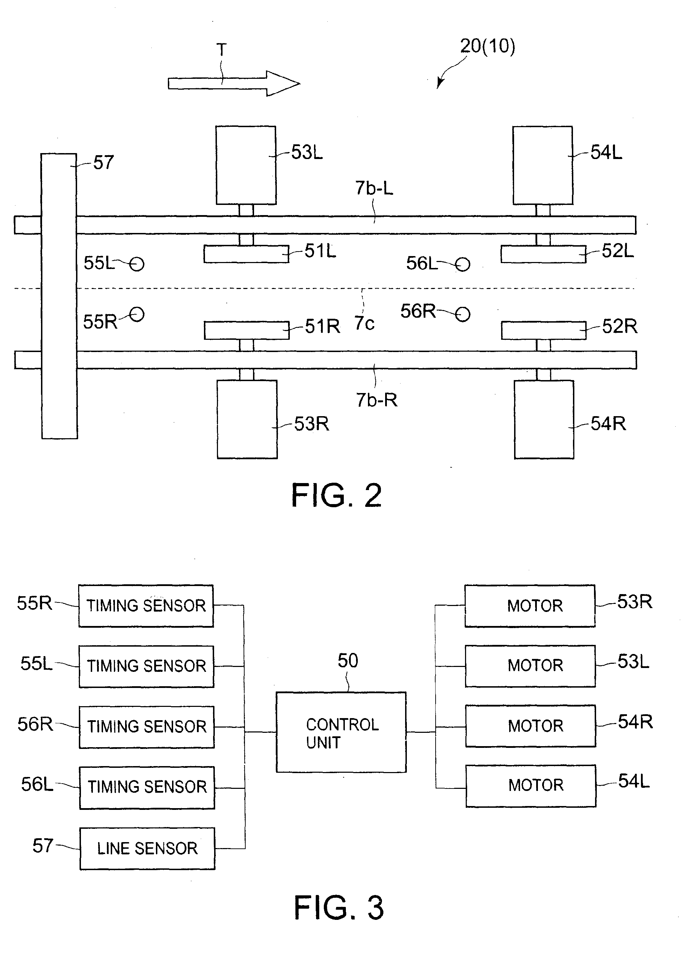

FIG. 2 schematically illustrates the structure of a portion of the posture converting devices 10, 20 described above. FIG. 3 is a block diagram illustrating a control system for controlling operation of these posture converting devices 10, 20. The above-described two posture converting devices 10, 20 incorporated into the banknote processing machine 1 have substantially the same structure. In the descriptions made below, the posture converting device 20 on the downstream side will be mainly described representing them both. As described above, the posture converting device 20 described below rotates, by 90 degrees, the conveyance posture of the banknote P so as to convert the longitudinal conveyance into the lateral conveyance. Although description is not made herein, the first posture converting device 10 operates in the same manner as the posture converting device 20 described below so as to convert a banknote P from the lateral conveyance into the longitudinal conveyance.

As shown in FIG. 2, the posture converting device 20 has four correction rollers 51R, 51L, 52R, 52L arranged to be spaced apart from each other on the upstream side and the downstream side along the conveying direction of the banknote P (the direction indicated by arrow T in FIG. 2), two of which are arranged on the left thereof and the other two of which are arranged on the right thereof. Along the conveying direction T, the two correction rollers 51R and 51L on the upstream side and the two correction rollers 52R and 52L on the downstream side are arranged to be spaced apart from each other at such positions axisymmetrical from each other with respect to a central line 7c of the conveyance route 7.

Driven rollers, which are not shown in the drawings, are respectively in pressurized contact with the correction rollers 51R, 51L, 52R, 52L via the conveyance route (conveyance surface) 7 in a pinching manner. The conveying route 7 is defined by two conveyor belts 7b-R, 7b-L extending along the conveying direction T and arranged at positions spaced apart in a direction intersecting with the conveying direction T.

Therefore, the banknote P conveyed via the conveyance route 7 is sandwiched and restricted by four nip sections between the four correction rollers 51R, 51L, 52R, 52L and the four driven rollers respectively facing them, while the banknote P is sandwiched by the pair of conveyor belts 7b-R, 7b-L and conveyed to the direction indicated by arrow T. At this occasion, since the restricting force exerted by the nip sections of the four pairs of the rollers is larger than the restricting force exerted by the pair of conveyor belts 7b-R, 7b-L, the behavior of the banknote P passing through the posture converting device 20 relies on the rotations of the four correction rollers 51R, 51L, 52R, 52L.

The correction rollers 51R, 51L, 52R, 52L are attached to rotational axes of motors 53R, 53L, 54R, 54L, respectively, and each of the correction rollers 51R, 51L, 52R, 52L is independently rotated at a desired speed controlled by a control unit 50 shown in FIG. 3. Timing sensors 55R, 55L, 56R, 56L are arranged on an upstream side of the nip sections between the correction rollers 51R, 51L, 52R, 52L and the driven rollers, which are not shown in the drawings, respectively facing them. The timing sensors 55R, 55L, 56R, 56L obtain control timings of motors 53R, 53L, 54R, 54L. FIG. 2 illustrates regions in which the optical axes of the timing sensors 55R, 55L, 56R, 56L intersect with the conveying route.

A line sensor 57 is arranged at a position spaced to be apart from and to be on an upstream side of the correction rollers 51R, 51L of the upstream side. The line sensor 57 detects the angle of inclination (skew angle θ1) with respect to the central line 7c of the banknote P conveyed into the posture converting device 20. Since this line sensor 57 functions in the same manner as the above optical array sensor 8, the detailed description about the line sensor 57 is not made herein.

Therefore, when a banknote P to be subjected to posture conversion is conveyed into the posture converting device 20 via the conveyance route 7, the control unit 50 of the posture converting device 20 detects the skew angle θ1 of the banknote P based on an output given by the lines sensor 11 as necessary, and applies nonholonomic control to the four correction rollers 51R, 51L, 52R, 52L based on outputs of the four timing sensors 55R, 55L, 56R, 56L, thereby reducing the conveyance speed of the banknote P and rotating the banknote P by 90 degrees. On the other hand, the posture converting device 10 converting the lateral conveyance into the longitudinal conveyance accelerates the conveyance speed of the banknote P and rotates the posture by 90 degrees.

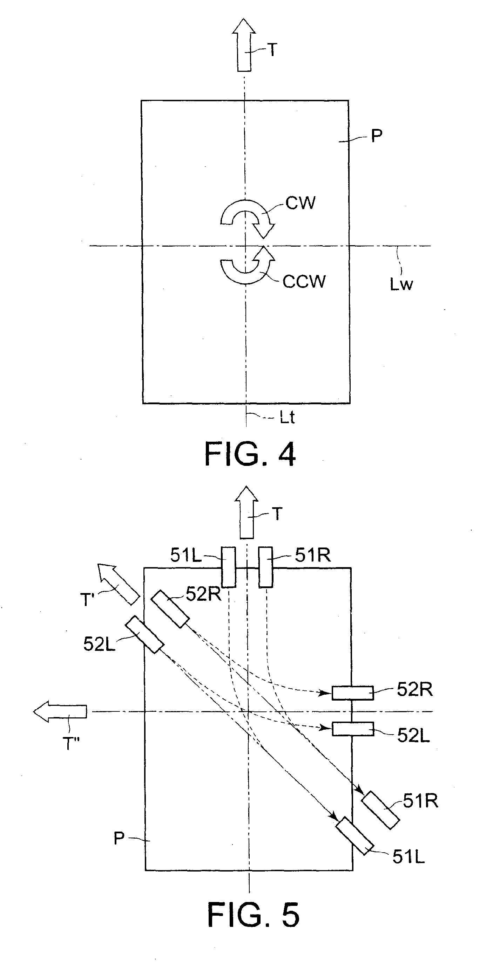

The above-described posture converting operation of the posture converting device 20 will be explained with reference to FIGS. 4 to 10. In the descriptions made below, the operation of conveying a banknote P by sandwiching and restricting the banknote P at the nip sections between the correction rollers and the drive rollers is simply substituted by the operation performed by the correction rollers 51R, 51L, 52R, 52L.

The banknote P conveyed into the posture converting device 20 is conveyed by the longitudinal conveyance by way of the detection unit 11. Then, the banknote P passes by the two upstream-side correction rollers 51R, 51L, and thereafter, the banknote P passes by the two downstream-side correction rollers 52R, 52L. At this occasion, the control unit 50 controls the rotation of the four correction rollers 51R, 51L, 52R, 52L according to a previously-defined algorithm. Thereby, the control unit 50 reduces the conveyance speed of the banknote P, and rotates the conveyance posture thereof by 90 degrees, thus conveying the banknote P to the conveying route 7 as the lateral conveyance. In broad terms, the two upstream-side correction rollers 51R, 51L rotate the banknote P to some extent, and the two downstream-side correction rollers 52R, 52L performs the remaining rotation of the banknote P, and the rollers on the upstream side and/or the rollers on the downstream side reduce the conveyance speed of the banknote P.

In the descriptions made below, as shown in FIG. 4, the entire region of the banknote P is divided into four regions. The banknote P is divided into four quadrants by a line Lt passing through midpoints of two shorter sides of the banknote P conveyed in the direction indicated by arrow T, and by a line Lw passing through midpoints of two longer sides. In FIG. 4, the upper right region is the first quadrant, the upper left region is the second quadrant, the lower left region is the third quadrant, and the lower right region is the fourth quadrant. Then, the banknote P is rotated in the clockwise direction (the direction indicated by arrow CW) or the counterclockwise direction (the direction indicated by arrow CCW).

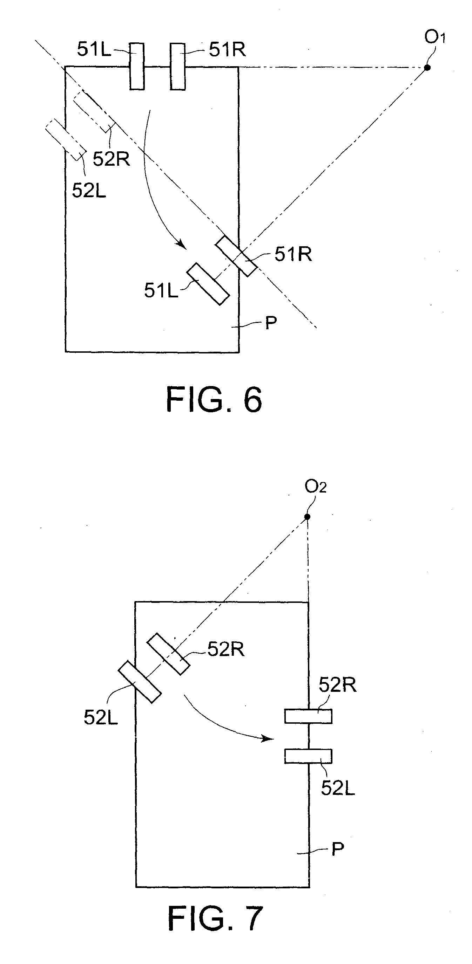

In order to rotate the banknote P in the clockwise direction CW shown in FIG. 4, first, the two upstream-side correction rollers 51R, 51L sandwich and restrict the head of the banknote P in the conveying direction as shown in FIG. 5. In this state, the control unit 50 makes a speed difference between the two upstream-side correction rollers 51R, 51L, and rotates the banknote P in the clockwise direction about a point O1 shown in FIG. 6. FIG. 5 shows arrow T' indicating the conveying direction of the banknote P after the two upstream-side correction rollers 51R, 51L have finished the rotation control.

At this occasion, the amount of rotation of the banknote P by the two upstream-side correction rollers 51R, 51L is configured such that the two downstream-side correction rollers 52R, 52L can sandwich and restrict the second quadrant of the banknote P when the banknote P is handed over to the two downstream-side correction rollers 52R, 52L after the rotation of the two upstream-side correction rollers 51R, 51L. It should be noted that after the rotation of the two upstream-side correction rollers 51R, 51L, the banknote P is conveyed straightly for a slight distance in the direction indicated by arrow T' by the two upstream-side correction rollers 51R, 51L, and thereafter, the banknote P is handed over to the two downstream-side correction rollers 52R, 52L.

In other words, in order to hand over the second quadrant of the banknote P to the two downstream-side correction rollers 52R, 52L, it is an indispensable condition for the two upstream-side correction rollers 51R, 51L to sandwich and restrict the fourth quadrant of the banknote P immediately before the banknote P passes through the two upstream-side correction rollers 51R, 51L. The two upstream-side correction rollers 51R, 51L and the two downstream-side correction rollers 52R, 52L are fixedly arranged with respect to each other. Accordingly, after the upstream-side correction rollers 51R, 51L sandwich and restrict the fourth quadrant, the downstream-side correction rollers 52R, 52L consequently sandwich and restrict the second quadrant of the banknote P.

Then, after the banknote P is handed over to the two downstream-side correction rollers 52R, 52L, the control unit 50 makes a speed difference between the two downstream-side correction rollers 52R, 52L sandwiching and restricting the second quadrant of the banknote P, and further rotates the banknote P in the clockwise direction about a point O2 shown in FIG. 7. FIG. 5 shows arrow T" indicating the conveying direction of the banknote P after the two downstream-side correction rollers 52R, 52L have finished the rotation control.

At this occasion, the amount of rotation of the banknote P by the two downstream-side correction rollers 52R, 52L is configured such that the banknote P is converted into such a posture that the longer side of the banknote P intersects with the conveying direction T after the rotation. In other words, the conveyance posture of the banknote P is converted into the lateral conveyance after the two downstream-side correction rollers 52R, 52L have finished the rotation control.

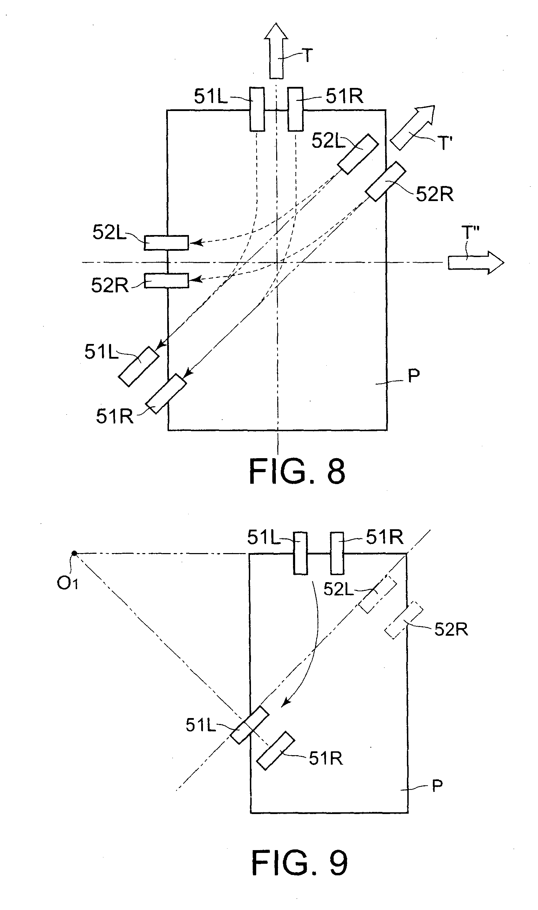

On the other hand, when the banknote P is rotated in the counterclockwise direction CCW by the posture converting device 20, first, the two upstream-side correction rollers 51R, 51L sandwich and restrict the head of the banknote P in the conveying direction as shown in FIG. 8. In this state, the control unit 50 makes a speed difference between the two upstream-side correction rollers 51R, 51L, and rotates the banknote P in the counterclockwise direction about the point O1 shown in FIG. 9. FIG. 8 shows arrow T' indicating the conveying direction of the banknote P after the two upstream-side correction rollers 51R, 51L have finished the rotation control.

At this occasion, the amount of rotation of the banknote P by the two upstream-side correction rollers 51R, 51L is configured such that the two downstream-side correction rollers 52R, 52L can sandwich and restrict the first quadrant of the banknote P when the banknote P is handed over to the two downstream-side correction rollers 52R, 52L after the rotation of the two upstream-side correction rollers 51R, 51L. It should be noted that after the rotation of the two upstream-side correction rollers 51R, 51L, the banknote P is conveyed straightly for a slight distance in the direction indicated by the arrow T' by the two upstream-side correction rollers 51R, 51L, and thereafter, the banknote P is handed over to the two downstream-side correction rollers 52R, 52L.

In other words, in order to hand over the first quadrant of the banknote P to the two downstream-side correction rollers 52R, 52L, it is an indispensable condition for the two upstream-side correction rollers 51R, 51L to sandwich and restrict the third quadrant of the banknote P immediately before the banknote P passes through the two upstream-side correction rollers 51R, 51L. The two upstream-side correction rollers 51R, 51L and the two downstream-side correction rollers 52R, 52L are fixedly arranged with respect to each other. Accordingly, after the upstream-side correction rollers 51R, 51L sandwich and restrict the third quadrant, the downstream-side correction rollers 52R, 52L consequently sandwich and restrict the first quadrant of the banknote P.

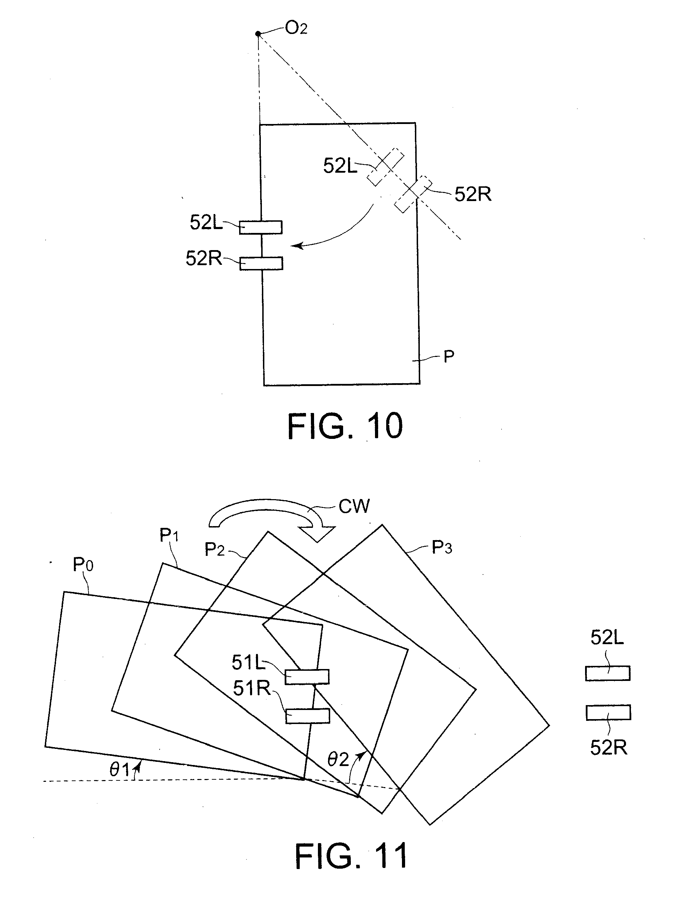

Then, after the banknote P is handed over to the two downstream-side correction rollers 52R, 52L, the control unit 50 makes a speed difference between the two downstream-side correction rollers 52R, 52L sandwiching and restricting the first quadrant of the banknote P, and further rotates the banknote P in the counterclockwise direction about the point O2 shown in FIG. 10. FIG. 8 shows arrow T" indicating the conveying direction of the banknote P after the two downstream-side correction rollers 52R, 52L have finished the rotation control.

At this occasion, the amount of rotation of the banknote P by the two downstream-side correction rollers 52R, 52L is configured such that the banknote P is converted into such a posture that the longer side of the banknote P intersects with the conveying direction T after the rotation. In other words, the conveyance posture of the banknote P is converted into the lateral conveyance after the two downstream-side correction rollers 52R, 52L have finished the rotation control.

As described above, by controlling the rotations of the four correction rollers 51R, 51L, 52R, 52L, the conveyance posture of the banknote P can be converted from the longitudinal conveyance into the lateral conveyance in reliable and accurate manner. In reality, however, the banknote P conveyed into the posture converting device 20 is not necessarily conveyed straightly with respect to the conveying direction T. Accordingly, in the actual control, it is necessary to cause the line sensor 57 to detect the amount of skew θ1 and control the posture in view of the amount of skew.

The posture control in view of the amount of skew θ1 will be described below with reference to FIGS. 11 to 18 in a different perspective. Herein, speed patterns of the correction rollers 51R, 51L, 52R, 52L are shown. Also described is a control for reducing the conveyance speed of the banknote P during the posture conversion. It should be noted that the descriptions similar to the above about the posture control will not be made, as necessary.

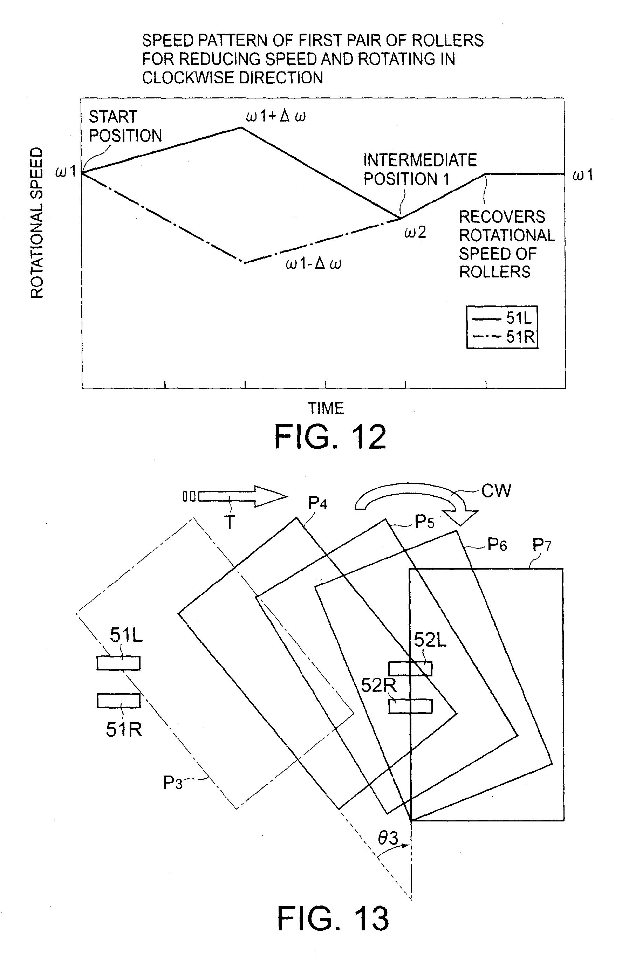

First, the following case will be explained with reference to FIGS. 11 to 14: a banknote P conveyed by the longitudinal conveyance is rotated in the clockwise direction CW so as to convert the conveyance posture into the lateral conveyance. When the banknote P to be processed has not yet reached the posture converting device 20, the two upstream-side correction rollers 51R, 51L rotate at the same peripheral speed as the conveyance speed of the banknote P conveyed by the vertical conveyance into the posture converting device 20. In FIG. 12, the rotational speed of the correction rollers 51R, 51L at this moment is represented as an angular speed ω1.

As shown in FIG. 11, the two upstream-side correction rollers 51R, 51L begin the posture control by sandwiching and restricting the head, in the conveying direction, of a banknote P0 conveyed with a skew angle θ1 with respect to the conveying direction T. At this occasion, as shown in FIG. 12, the control unit 50 accelerates the correction roller 51L on the left side, i.e., the outer side of the rotation, from ω1, and decelerates the correction roller 51R on the right side, i.e., the inner side of the rotation, from ω1. Then, when the rotational speeds of these two correction rollers 51L, 51R attain ω1+Δω, ω1-Δω, respectively, the control unit 50 decelerates the outer-side correction roller 51L and accelerates the inner-side correction roller 51R, so that the angular speed of the two correction rollers 51R, 51L attains an angular speed ω2 slower than the angular speed ω1.

As a result, the conveyance posture of the banknote P to be controlled changes from P0 to P3 along arrow CW shown in FIG. 11, and the banknote P decelerates from ω1 to ω2 in terms of the angular speed of the correction rollers 51R, 51L. Thereafter, the banknote P3 is straightly conveyed along the conveying route 7 as shown by arrow T in FIG. 13, and is handed over to the two downstream-side correction rollers 52R, 52L as shown by P4. At this moment, the angular speed of the two downstream-side correction rollers 52R, 52L is controlled to be ω2 in advance. On the other hand, the two upstream-side correction rollers 51R, 51L are accelerated to ω1 so as to be ready for processing of a banknote P subsequently conveyed.

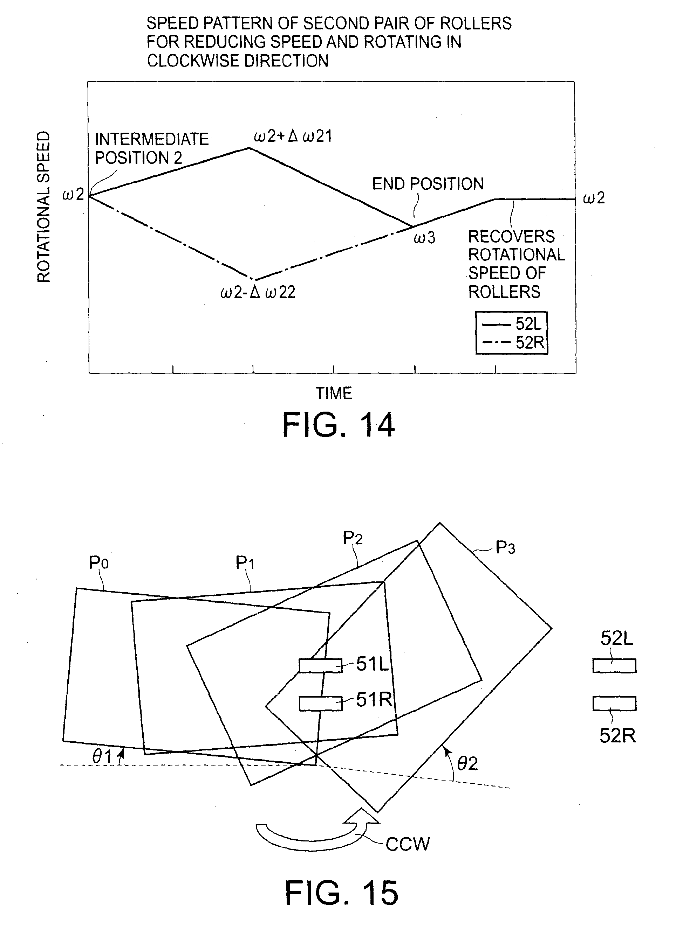

The banknote P3 is handed over to the two downstream-side correction rollers 52R, 52L. At this occasion, as shown in FIG. 14, the control unit 50 accelerates the correction roller 52L on the left side, i.e., the outer side of the rotation, from ω2, and decelerates the correction roller 52R on the right side, i.e., the inner side of the rotation, from ω2. Then, when the rotational speeds of these two correction rollers 52L, 52R attain ω2+ωD21, ω2-Δω22, respectively, the control unit 50 decelerates the outer-side correction roller 52L and accelerates the inner-side correction roller 52R, so that the angular speed of the two correction rollers 52R, 52L attains an angular speed ω3 slower than the angular speed ω2.

As a result, the conveyance posture of the banknote P to be controlled changes from P4 to P7 along arrow CW shown in FIG. 13, and the banknote P decelerates from ω2 to ω3 in terms of the angular speed of the correction rollers 52R, 52L. At this moment, the conveyance posture of the banknote P7 is converted into the lateral conveyance in which the longer side of the banknote P intersects with the conveying direction T. Thereafter, the two downstream-side correction rollers 52R, 52L are accelerated to ω2 so as to be ready for processing of a banknote P subsequently conveyed.

That is, the control unit 50 uses the line sensor 57 to detect the amount of skew of the banknote P to be processed, and calculates the speed patterns shown in FIGS. 12 and 14. The control unit 50 uses the four timing sensors 55R, 55L, 56R, 56L to obtain control timings of the four correction rollers 51R, 51L, 52R, 52L. Accordingly, the control unit 50 controls the rotations of the two upstream-side correction rollers 51R, 51L according the speed pattern shown in the graph of FIG. 12, and controls the rotations of the two downstream-side correction rollers 52R, 52L according the speed pattern shown in the graph of FIG. 14. Thereby, the control unit 50 decelerates the banknote P conveyed by the longitudinal conveyance with the skew, and rotates the banknote P in the clockwise direction so as to eliminate the skew. As a result, the banknote P can be conveyed by the lateral conveyance, when the banknote P is conveyed out of the posture converting device 20.

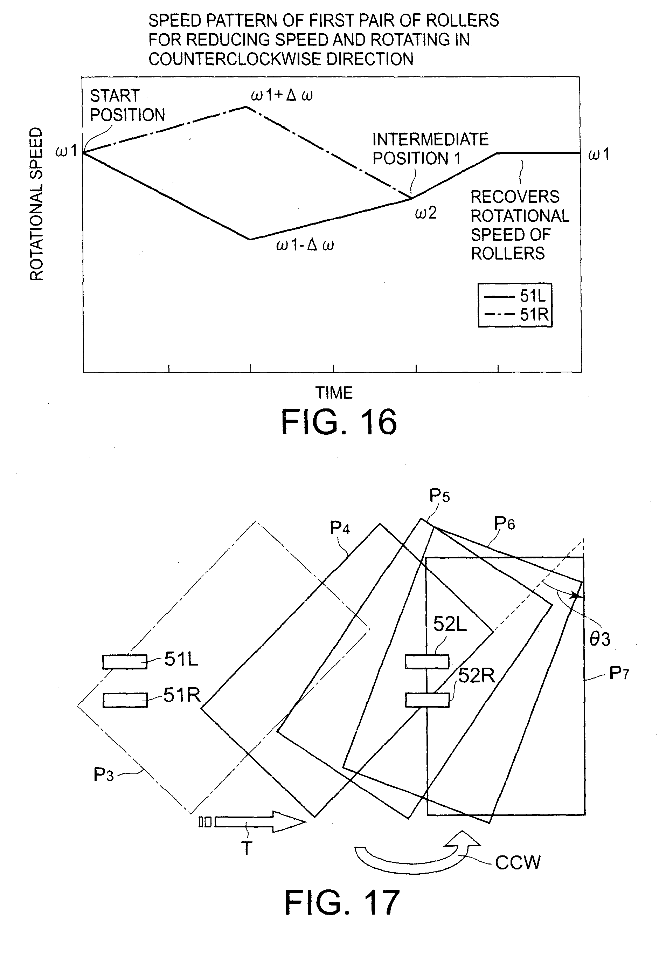

Subsequently, the following case will be described with reference to FIGS. 15 to. 18: a banknote P conveyed by the longitudinal conveyance is rotated in the counterclockwise direction CCW so as to convert the conveyance posture into the lateral conveyance. When the banknote P to be processed has not yet reached the posture converting device 20, the two upstream-side correction rollers 51R, 51L rotate at the same peripheral speed as the conveyance speed of the banknote P conveyed by the vertical conveyance into the posture converting device 20. In FIG. 16, the rotational speed of the correction rollers 51R, 51L at this moment is denoted as an angular speed ω1.

As shown in FIG. 15, the two upstream-side correction rollers 51R, 51L begin the posture control by sandwiching and restricting the head, in the conveying direction, of a banknote P0 conveyed with a skew angle θ1 with respect to the conveying direction T. At this occasion, as shown in FIG. 16, the control unit 50 accelerates the correction roller 51R on the right side, i.e., the outer side of the rotation, from ω1, and decelerates the correction roller 51L on the left side, i.e., the inner side of the rotation, from ω1. Then, when the rotational speeds of these two correction rollers 51R, 51L attain ω1+Δω, ω1-Δω, respectively, the control unit 50 decelerates the outer-side correction roller 51R and accelerates the inner-side correction roller 51L, so that the angular speed of the two correction rollers 51R, 51L attains an angular speed ω2 slower than the angular speed ω1.

As a result, the conveyance posture of the banknote P to be controlled changes from P0 to P3 along an arrow CCW shown in FIG. 11, and the banknote P decelerates from ω1 to ω2 in terms of the angular speed of the correction rollers 51R, 51L. Thereafter, the banknote P3 is straightly conveyed along the conveying route 7 as shown by an arrow T in FIG. 17, and is handed over to the two downstream-side correction rollers 52R, 52L as shown by P4. At this moment, the angular speed of the two downstream-side correction rollers 52R, 52L is controlled to be ω2 in advance. On the other hand, the two upstream-side correction rollers 51R, 51L are accelerated to ω1 so as to be ready for processing of a banknote P subsequently conveyed.

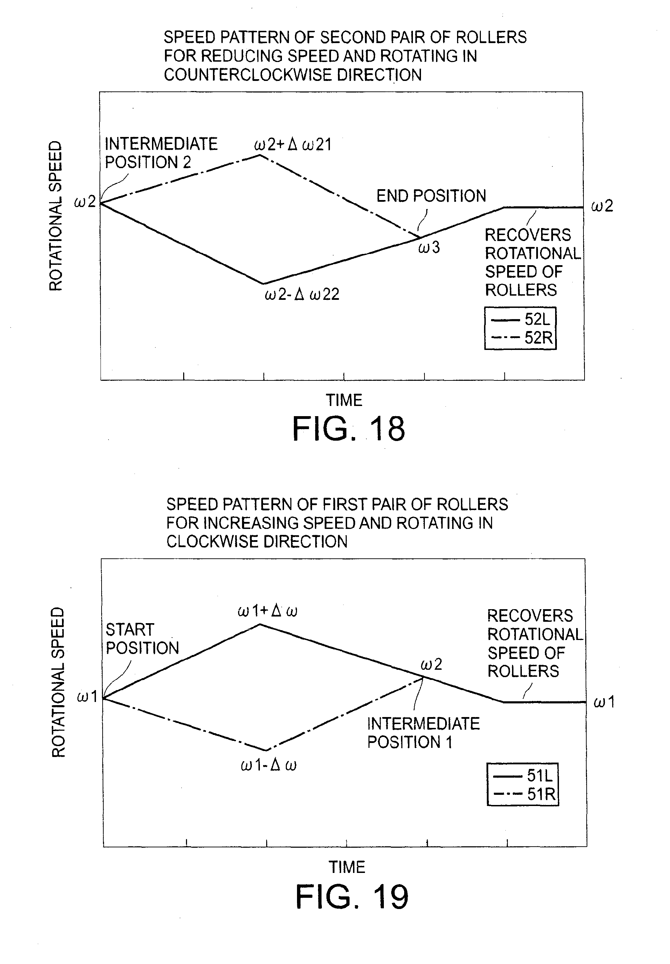

The banknote P3 is handed over to the two downstream-side correction rollers 52R, 52L. At this occasion, as shown in FIG. 18, the control unit 50 accelerates the correction roller 52R on the right side, i.e., the outer side of the rotation, from ω2, and decelerates the correction roller 52L on the left side, i.e., the inner side of the rotation, from ω2. Then, when the rotational speeds of these two correction rollers 52R, 52L attain ω2+Δω21, ω2-Δω22, respectively, the control unit 50 decelerates the outer-side correction roller 52R and accelerates the inner-side correction roller 52L, so that the angular speed of the two correction rollers 52R, 52L attains an angular speed ω3 slower than the angular speed ω2.

As a result, the conveyance posture of the banknote P to be controlled changes from P4 to P7 along an arrow CCW shown in FIG. 17, and the banknote P decelerates from ω2 to ω3 in terms of the angular speed of the correction rollers 52R, 52L. At this moment, the conveyance posture of the banknote P7 is converted into the lateral conveyance in which the longer side of the banknote P intersects with the conveying direction T. Thereafter, the two downstream-side correction rollers 52R, 52L are accelerated to ω2 so as to be ready for processing of a banknote P subsequently conveyed.

That is, the control unit 50 uses the line sensor 57 to detect the amount of skew of the banknote P to be processed, and calculates the speed patterns shown in FIGS. 16 and 18. The control unit 50 uses the four timing sensors 55R, 55L, 56R, 56L to obtain control timings of the four correction rollers 51R, 51L, 52R, 52L. Accordingly, the control unit 50 controls the rotations of the two upstream-side correction rollers 51R, 51L according the speed pattern shown in the graph of FIG. 16, and controls the rotations of the two downstream-side correction rollers 52R, 52L according the speed pattern shown in the graph of FIG. 18. Thereby, the control unit 50 decelerates the banknote P conveyed by the longitudinal conveyance with the skew, and rotates the banknote P in the counterclockwise direction so as to eliminate the skew. As a result, the banknote P can be conveyed by the lateral conveyance, when the banknote P is conveyed out of the posture converting device 20.

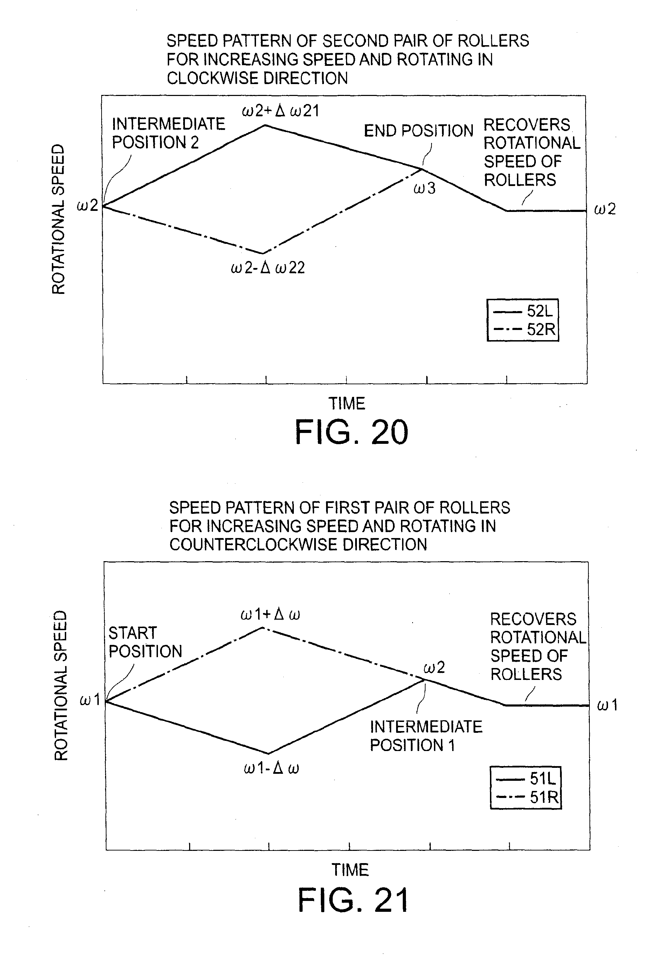

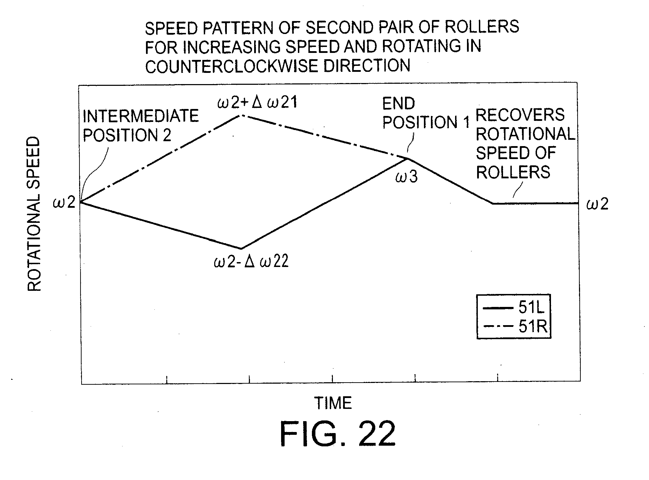

In a case where a banknote P is obtained from the insert port 3 and the conveyance posture of the banknote P is converted from the lateral conveyance to the longitudinal conveyance by the another posture converting device 10, the conveyance posture can be converted by controlling the rotations of the four correction rollers 51R, 51L 52R, 52L according to the speed patterns shown in FIGS. 19 and 20 (the clockwise rotation) or FIGS. 21 and 22 (the counterclockwise rotation).

For example, when the banknote P is rotated in the clockwise direction by the posture converting device 10, the control unit 50 accelerates the correction roller 51L on the left side, i.e., the outer side of the rotation, from ω1, and decelerates the correction roller 51R on the right side, i.e., the inner side of the rotation, from ω1, as shown in FIG. 19. Then, when the rotational speeds of these two correction rollers 51L, 51R attain ω1+Δω, ω1-Δω, respectively, the control unit 50 decelerates the outer-side correction roller 51L and accelerates the inner-side correction roller 51R, so that the angular speed of the two correction rollers 51R, 51L attains an angular speed ω2 faster than the angular speed ω1.

As a result, the conveyance posture of the banknote P to be controlled is rotated in the clockwise direction to some extent, and the banknote P is accelerated from ω1 to ω2 in terms of the angular speed of the correction rollers 51R, 51L. Thereafter, the banknote P is straightly conveyed along the conveying route 7, and is handed over to the two downstream-side correction rollers 52R, 52L. At this moment, the angular speed of the two downstream-side correction rollers 52R, 52L is controlled to be ω2 in advance. On the other hand, the two upstream-side correction rollers 51R, 51L are decelerated to ω1 so as to be ready for processing of a banknote P subsequently conveyed.

The banknote P is handed over to the two downstream-side correction rollers 52R, 52L. At this occasion, as shown in FIG. 20, the control unit 50 accelerates the correction roller 52L on the left side, i.e., the outer side of the rotation, from ω2, and decelerates the correction roller 52R on the right side, i.e., the inner side of the rotation, from ω2. Then, when the rotational speeds of these two correction rollers 52L, 52R attain ω2+Δω21, ω2-Δω22, respectively, the control unit 50 decelerates the outer-side correction roller 52L and accelerates the inner-side correction roller 52R, so that the angular speed of the two correction rollers 52R, 52L attains an angular speed ω3 faster than the angular speed ω2.

As a result, the conveyance posture of the banknote P to be controlled is further rotated in the clockwise direction, and the banknote P accelerates from ω2 to ω3 in terms of the angular speed of the correction rollers 52R, 52L. At this moment, the conveyance posture of the banknote P is converted into the longitudinal conveyance in which the longer side of the banknote P conforms to the conveying direction T. Thereafter, the two downstream-side correction rollers 52R, 52L are decelerated to ω2 so as to be ready for processing of a banknote P subsequently conveyed.

That is, the control unit 50 uses the line sensor 57 to detect the amount of skew of the banknote P to be processed, and calculates the speed patterns shown in FIGS. 19 and 20. The control unit 50 uses the four timing sensors 55R, 55L, 56R, 56L to obtain control timings of the four correction rollers 51R, 51L, 52R, 52L. Accordingly, the control unit 50 controls the rotations of the two upstream-side correction rollers 51R, 51L according the speed pattern shown in the graph of FIG. 19, and controls the rotations of the two downstream-side correction rollers 52R, 52L according the speed pattern shown in the graph of FIG. 20. Thereby, the control unit 50 accelerates the banknote P conveyed by the lateral conveyance with the skew, and rotates the banknote P in the clockwise direction so as to eliminate the skew. As a result, the banknote P can be conveyed by the longitudinal conveyance, when the banknote P is conveyed out of the posture converting device 10.

On the other hand, when a banknote P is rotated in the counterclockwise direction by the posture converting device 10, the control unit 50 accelerates the correction roller 51R on the right side, i.e., the outer side of the rotation, from ω1, and decelerates the correction roller 51L on the left side, i.e., the inner side of the rotation, from ω1. Then, when the rotational speeds of these two correction rollers 51R, 51L attain ω1+Δω, ω1-Δω, respectively, the control unit 50 decelerates the outer-side correction roller 51R and accelerates the inner-side correction roller 51L, so that the angular speed of the two correction rollers 51R, 51L attains an angular speed ω2 faster than the angular speed ω1.

As a result, the conveyance posture of the banknote P to be controlled is rotated in the counterclockwise direction to some extent, and the banknote P is accelerated from ω1 to ω2 in terms of the angular speed of the correction rollers 51R, 51L. Thereafter, the banknote P is straightly conveyed along the conveying route 7, and is handed over to the two downstream-side correction rollers 52R, 52L. At this moment, the angular speed of the two downstream-side correction rollers 52R, 52L is controlled to be ω2 in advance. On the other hand, the two upstream-side correction rollers 51R, 51L are decelerated to ω1 so as to be ready for processing of a banknote P subsequently conveyed.

The banknote P is handed over to the two downstream-side correction rollers 52R, 52L. At this occasion, as shown in FIG. 22, the control unit 50 accelerates the correction roller 52R on the right side, i.e., the outer side of the rotation, from ω2, and decelerates the correction roller 52L on the left side, i.e., the inner side of the rotation, from ω2. Then, when the rotational speeds of these two correction rollers 52L, 52R attain ω2+Δω21, ω2-Δω22, respectively, the control unit 50 decelerates the outer-side correction roller 52R and accelerates the inner-side correction roller 52L, so that the angular speed of the two correction rollers 52R, 52L attains an angular speed ω3 faster than the angular speed ω2.

As a result, the conveyance posture of the banknote P to be controlled is further rotated in the counterclockwise direction, and the banknote P accelerates from ω2 to ω3 in terms of the angular speed of the correction rollers 52R, 52L. At this moment, the conveyance posture of the banknote P is converted into the longitudinal conveyance in which the longer side of the banknote P is in the conveying direction T. Thereafter, the two downstream-side correction rollers 52R, 52L are decelerated to ω2 so as to be ready for processing of a banknote P subsequently conveyed.

That is, the control unit 50 uses the line sensor 57 to detect the amount of skew of the banknote P to be processed, and calculates the speed patterns shown in FIGS. 21 and 22. The control unit 50 uses the four timing sensors 55R, 55L, 56R, 56L to obtain control timings of the four correction rollers 51R, 51L, 52R, 52L. Accordingly, the control unit 50 controls the rotations of the two upstream-side correction rollers 51R, 51L according the speed pattern shown in the graph of FIG. 21, and controls the rotations of the two downstream-side correction rollers 52R, 52L according the speed pattern shown in the graph of FIG. 22. Thereby, the control unit 50 accelerates the banknote P conveyed by the lateral conveyance with the skew, and rotates the banknote P in the counterclockwise direction so as to eliminate the skew. As a result, the banknote P can be conveyed by the longitudinal conveyance, when the banknote P is conveyed out of the posture converting device 10.

As described above, the present embodiment has a simple structure in which two correction rollers spaced apart in the direction intersecting with the conveying direction are arranged at the upstream side and the downstream side which are spaced apart in the conveying direction. This simple structure enables controlling the conveyance posture of a banknote P with high accuracy, improving the accuracy of detection of the banknote P, and inhibiting false detection of the banknote P. In a case where the present invention is applied to a mail processing machine as the present embodiment, the reading rate of destination addresses can be improved, and the processing efficiency can be improved.

For example, in the above-described embodiment, the present invention is applied to the banknote processing machine 1 for processing a banknote P. However, the present invention is not limited thereto. The present invention may be applied to other paper-like material processing apparatuses such as a mail processing machine for processing mails.

In the above-described embodiment, the four correction rollers are arranged on the upstream side and the downstream side in the posture converting devices 10, 20, for example. However, the present invention is not limited thereto. Two pairs of rollers may be arranged at each of three or more positions which are spaced apart from each other in the conveying direction T of a banknote P.

In the banknote processing machine 1 according to the above-described embodiment, the first posture converting device 10 converts the posture from lateral conveyance into vertical conveyance, and the second posture converting device 20 converts the posture from longitudinal conveyance into lateral conveyance. Accordingly, the orientation of the head/tail of the banknote P can be changed to a desired orientation by appropriately rotating the rotational direction of each banknote P. That is, although the banknote processing machine 1 having the head/tail reversing mechanism 27 for reversing the orientation of the head/tail of the banknote P has been explained in the above-described embodiment, the head/tail reversing mechanism 27 may be omitted because the two posture converting devices 10, 20 can perform the same function as the head/tail reversing mechanism 27.

In the above-described embodiment, when the posture converting device 20 changes the posture of the banknote P from the longitudinal conveyance into the lateral conveyance, the upstream-side correction rollers 51R, 51L decelerate the conveyance speed of the banknote P, and further, the downstream-side correction rollers 52R, 52L decelerate the conveyance speed of the banknote P. However, the present invention is not limited thereto. Alternatively, only one of the upstream-side correction rollers 51R, 51L and the downstream-side correction rollers 52R, 52L may be used to decelerate the conveyance speed of the banknote P.

In the above-described embodiment, when the posture converting device 10 converts the posture of the banknote P from the lateral conveyance into the longitudinal conveyance, the upstream-side correction rollers 51R, 51L accelerate the conveyance speed of the banknote P, and further, the downstream-side correction rollers 52R, 52L accelerate the conveyance speed of the banknote P. However, the present invention is not limited thereto. Alternatively, only one of the upstream-side correction rollers 51R, 51L and the downstream-side correction rollers 52R, 52L may be used to accelerate the conveyance speed of the banknote P.

## Claims

1. A posture converting device comprising:
two upstream-side correction rollers (51R, 51L) spaced apart in a direction intersecting with a conveying direction of a paper-like material;
two downstream-side correction rollers (52R, 52L) arranged at a position spaced apart from the upstream-side correction rollers (51R, 51L) on a downstream side in the conveying direction; and
a control unit (50) to independently control rotations of the four correction rollers (51R, 51L, 52R, 52L), wherein the control unit is adapted to rotate a conveyance posture of the paper-like material to some extent by causing a speed difference between the two upstream-side correction rollers (51R, 51L), and to rotate the paper-like material to a desired conveyance posture by causing a speed difference between the two downstream-side correction rollers (52R, 52L).

2. The posture converting device according to claim 1, wherein the control unit (50) is adapted to control change of a rotational speed of at least one of the two upstream-side correction rollers (51R, 51L) and the two downstream-side correction rollers (52R, 52L) in order to control a conveyance speed of the paper-like material so that the conveyance speed of the paper-like material attains a desired conveyance speed after the posture has been converted.

3. The posture converting device according to claim 1 or 2, wherein in a case where a length of the paper-like material in the conveying direction after the posture conversion is shorter than that before the posture conversion, the control unit (50) controls change of a rotational speed of at least one of the two upstream-side correction rollers (51R, 51L) and the two downstream-side correction rollers (52R, 52L) so that the conveyance speed of the paper-like material after the posture conversion is slower than that before the posture conversion, and wherein in a case where the length of the paper-like material in the conveying direction after the posture conversion is longer than that before the posture conversion, the control unit (50) controls change of a rotational speed of at least one of the two upstream-side correction rollers (51R, 51L) and the two downstream-side correction rollers (52R, 52L) so that the conveyance speed of the paper-like material after the posture conversion is faster than that before the posture conversion.

4. The posture converting device according to any of claims 1 to 3, wherein the control unit (50) is adapted to control change of a rotational speed of at least one of the two upstream-side correction rollers (51R, 51L) and the two downstream-side correction rollers (52R, 52L) so that a gap between paper-like materials after the posture conversion is the same as that before the posture conversion.

5. The posture converting device according to any of claims 1 to 4, wherein when the paper-like material conveyed by the two upstream-side correction rollers (51R, 51L) is handed over to the two downstream-side correction rollers (52R, 52L), the control unit (50) controls a rotational speed of the two downstream-side correction rollers (52R, 52L) so that the rotational speed of the two downstream-side correction rollers (52R, 52L) becomes the same as the rotational speed of the two upstream-side correction rollers (51R, 51L).

6. The posture converting device according to any of claims 1 to 5, further comprising:
a sensor (57) to detect the amount of skew of the paper-like material conveyed toward the two upstream-side correction rollers (51R, 51L),
wherein the control unit (50) is adapted to control a rotation of at least one of the two upstream-side correction rollers (51R, 51L) and the two downstream-side correction rollers (52R, 52L) so as to cancel the amount of skew of the paper-like material detected by the sensor (57).

7. A paper-like material processing apparatus comprising:
a first posture converting device (10) according to any one of claims 1 to 6, to convert the conveyance posture of the paper-like material, having been fetched in a shorter-side direction and conveyed by lateral conveyance, into a conveyance posture in which a longer-side direction of the paper-like material coincides with the conveying direction, thus conveying the paper-like material by longitudinal conveyance;
a detection unit (11) to detect a feature of the paper-like material that is conveyed by longitudinal conveyance after the posture of the paper-like material has been converted into the longitudinal conveyance by the first posture converting device (10);
a second posture converting device (20) according to any one of claims 1 to 6, to convert, from longitudinal conveyance into lateral conveyance, the posture of the paper-like material having passed through the detection unit (11); and
a processing unit to process the paper-like material having passed through the second posture converting device (20) based on the detection result of the detection unit (11).
